# EUROPEAN PATENT SPECIFICATION

(11) **EP 1 048 381 B1**
(45) Date of publication and mention of the grant of the patent: **13.08.2003**
(21) Application number: 00303322.2
(22) Date of filing: 19.04.2000
(51) Int. Cl.: B23B 27/08

(54) **Cutting tool and tool holder**
Schneidwerkzeug und Werkzeughalter
Outil de coupe et porte-outil

(30) Priority: 24.04.1999 GB 9909396
(43) Date of publication of application: 02.11.2000
(73) Proprietor: Advanced Carbide Tooling Ltd., Hinckley, Leicestershire LE10 3EZ (GB)
(72) Inventor: London, Keith, Leicestershire, LE10 2LE (GB)
(74) Representative: Spoor, Brian

(56) References cited:
- EP-A- 0 259 847
- EP-A- 0 742 062
- FR-A- 1 276 843
- US-A- 2 679 679
- US-A- 3 894 322

## Description

This invention relates to a combination of a tool holder and remorably fitted cutting tool, as described in the preamble of claim 1. Such a combination is known from document EP-A-0 259 847.

It is well known for cutting tools, in particular relatively small cutting tools such as parting-off tools, to comprise inserts which are interchangeably mounted in tool holders. The tool holders in turn are mounted in the machine tool, eg a lathe.

In one arrangement of this type, the tool insert is held in a slot formed in the side of the tool holder. In order to position the tip of the tool insert correctly this slot is arranged at an angle to the longitudinal axis of the tool holder, and this leads to reduced mechanical strength. In addition, correct positioning of the tool insert within the holder may be difficult or impossible to achieve reliably since it depends on abutment of the end of the tool insert with the end face of the slot and if that end of the tool insert becomes worn or damaged then the insert may be incorrectly positioned.

There has now been devised improvements to machine tool inserts which overcome or substantially mitigate these and other disadvantages of the prior art.

According to the invention, there is provided a combination as indicated in claim 1.

The combination according to the invention is advantageous primarily in that the cutting tool can be easily and securely positioned in the tool holder for use. In addition, the tool can be aligned with the shaft positioned parallel to the longitudinal axis of the tool holder. The slot is preferably provided in a side face of the body and is preferably formed with surfaces which co-operate with corresponding surfaces of the shaft to provide lateral retention of the shaft within the slot.

The means for securing the tool within the tool holder preferably comprises clamping means. Most preferably, the end of the tool holder which receives the tool is split along the axis of the slot to form a pair of jaws which can be drawn into retaining engagement with the tool, eg by a threaded fastener.

The invention will now be described in greater detail, by way of example only, with reference to the accompanying drawings, in which
Figure 1 is a side view of a cutting tool; Figure 2 is a front end view of the cutting tool of Figure 1;
Figure 3 is a plan view of the cutting tool of Figure 1;
Figure 4 is a side view of a tool holder with which the tool of Figure 1 is used;
Figure 5 is a plan view of the tool holder of Figure 4; and
Figure 6 is a sectional view on the line VI-VI in Figure 4.

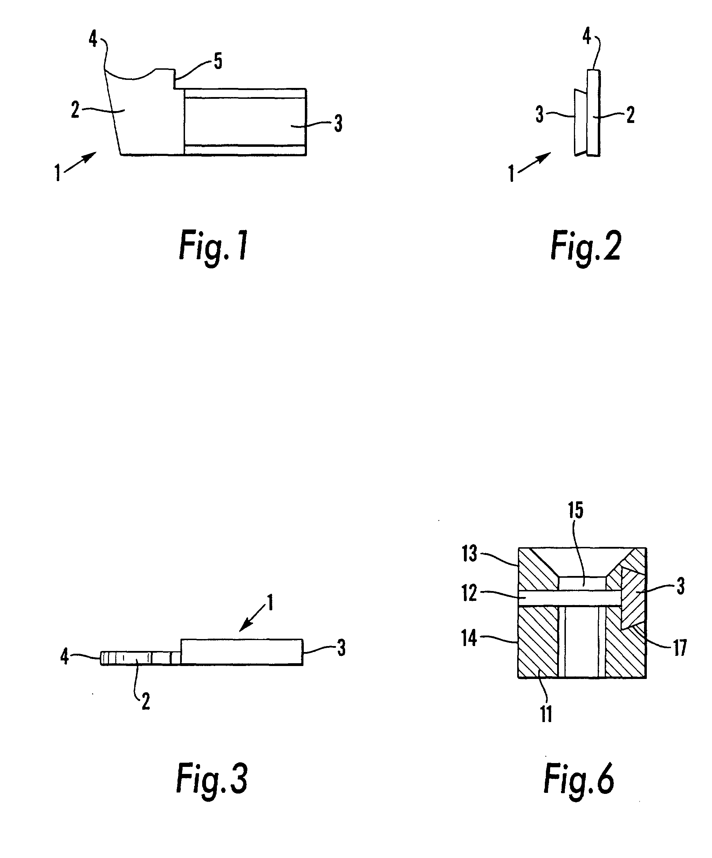

Referring first to Figures 1 to 3, a cutting tool is generally designated 1 and comprises a head 2 with a shaft 3. The shaft 3 has chamfered longitudinal edges by which it is retained in a tool holder in the manner described below. The cutting tip 4 of the head 2 is offset from the shaft 3, there being a shoulder 5 at the junction of the shaft 3 and head 2.

As can be seen from Figures 2 and 3, the shaft 3 is of greater thickness than the head 2.

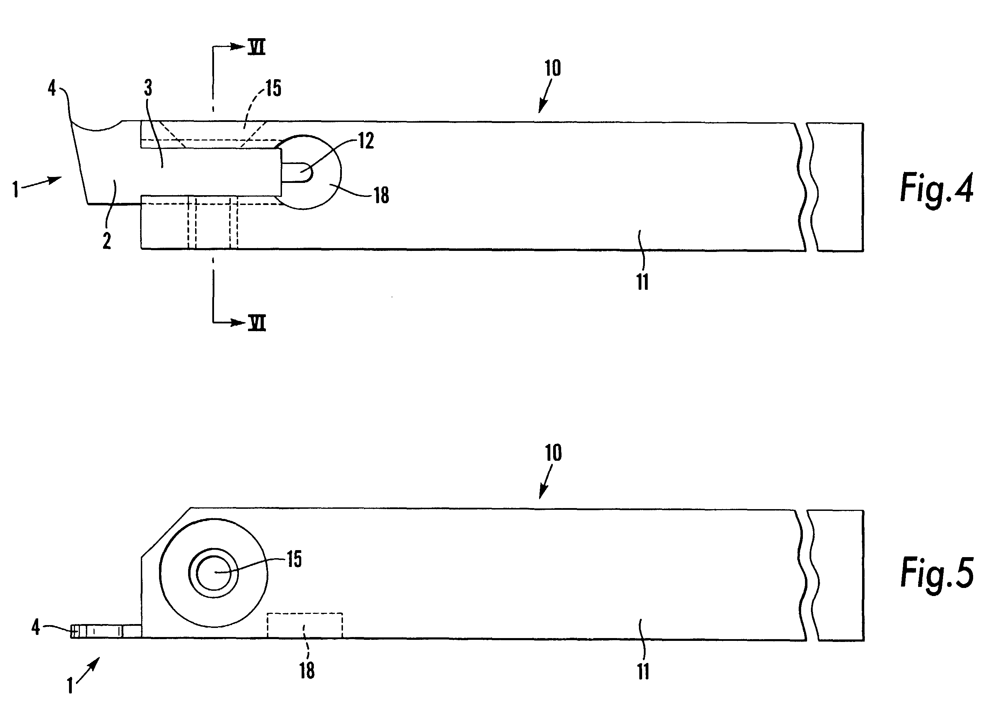

Turning now to Figures 4 to 6, a tool holder with which the cutting tool of Figures 1 to 3 is used is generally designated 10 and comprises an elongate body 11 of generally square cross-section. The body 11 is formed at the end which receives the cutting tool 1 with a transverse slot 12 which divides that end of the body 11 into a pair of clamping jaws 13,14. A countersunk bore 15 extends vertically (as viewed in Figure 6) through the clamping jaws 13,14. The portion of the bore 15 which lies in the lower clamping jaw 14 is threaded. A clamping bolt (not shown) is engaged in the bore 15 and is used to draw the clamping limbs 13,14 towards each other in a clamping action.

The body 11 is also formed, along one side of the end which receives the cutting tool 1, with a longitudinal slot 17. The slot 17 is of trapezoidal cross-section, corresponding in form to the cross-section of the shaft 3. The slot 17 terminates in a circular recess 18 formed in the side of the body 11.

The cutting tool 1 is fitted to the tool holder 10 as follows. With the clamping screw (not shown) loosened or absent from the bore 15, the shaft 3 of the tool 1 is slid into the longitudinal slot 17 in the side of the body 11 until the shoulder 5 abuts the end of the body 11. The free end of the shaft 3 is then accommodated within the recess 18. The tool 1 is retained laterally by the chamfered shape of the slot 17 and shaft 3, and the clamping screw is then tightened until the clamping action of the jaws 13,14 holds the shaft 3 firmly in place.

When mounted in the tool holder 10 in this manner, the cutting tip 4 of the cutting tool 1 is positioned in line with the upper edge of the body 11, yet the cutting tool 1 is aligned parallel to the longitudinal axis of the tool holder 10. The head 2 of the cutting tool 1 is positioned reliably by abutment of the shoulder 5 with the end of the body 11 and is not affected by damage or wear to, for instance, the free end of the shaft 3.

The tool holder 10 may be mounted in a machine tool in a conventional manner.

## Claims

1. The combination of a tool holder and removably fitted cutting tool, the tool holder (10) comprising an elongate body (11) provided with a slot (17) adapted to receive the shaft (3) of the tool (1), and means for securing the tool within the tool holder, the cutting tool (1) including a head (2) which is offset from the shaft (3) by a shoulder (5) which serves, by abutment with the tool holder, to position the tool (1) relative to the holder (10), **characterised in that** the slot is disposed parallel to the longitudinal axis of the body the top of the tool (1) includes a cutting tip (4) which is in line with both the lateral extent of the shoulder (5) and with the upper edge of the body (11), and the cutting tool is aligned parallel to the longitudinal axis of the body (11).

2. The combination of a tool holder and removably fitted cutting tool according to claim 1, **characterised in that** the shaft (3) has chamfered longitudinal edges.

3. The combination of a tool holder and removably fitted cutting tool according to claim 1 or claim 2, **characterised in that** the shaft (3) is of greater thickness than the head (2).

4. The combination of a tool holder and removably fitted cutting tool according to any one of claims 1 to 3, **characterised in that** the slot (17) is provided in a face of the body.

5. The combination of a tool holder and removably fitted cutting tool according to any one of claims 1 to 4, **characterised in that** the slot (17) is formed with surfaces which cooperate with corresponding surfaces of the shaft (3) to provide lateral retention ofthe shaft (3) within the slot (17).

6. The combination of a tool holder and removably fitted cutting tool according to any one of claims 1 to 5, **characterised in that** the end of the tool holder which receives the tool is split along the axis of the slot (17) to form a pair of jaws (13,14) which can be drawn into retaining engagement with the tool (1)

7. The combination of a tool holder and removably fitted cutting tool according to claim 6, **characterised in that** a threaded fastener is used to draw the pair of jaws (13,14) into retaining engagement with the tool (1).

## Patentansprüche

1. Kombination eines Werkzeughalters und eines entfernbar angebrachten Schneidwerkzeugs, wobei der Werkzeughalter (10) einen langgestreckten Körper (11) aufweist, der mit einem Schlitz (17) versehen ist, der die Welle (3) des Werkzeugs (1) empfangen kann, und ein Mittel, um das Werkzeug in dem Werkzeughalter zu befestigen, wobei das Schneidwerkzeug (1) einen Kopf (2) einschließt, der von der Welle (3) um eine Schulter (5) versetzt ist, die, durch Anschlag mit dem Werkzeughalter dazu dient, das Werkzeug (1) relativ zu dem Halter (10) anzuordnen, **dadurch gekennzeichnet, dass** der Schlitz parallel zu der Längsachse des Körpers angeordnet ist, das Oberteil des Werkzeugs (1) eine Schneidspitze (4) einschließt, die mit der seitlichen Ausdehnung der Schulter (5) und mit der oberen Kante des Körpers (11) auf einer Linie liegen, und dass das Schneidwerkzeug parallel zu der Längsachse des Körpers (11) ausgerichtet ist.

2. Kombination eines Werkzeughalters und eines entfernbar angebrachten Schneidwerkzeugs nach Anspruch 1, **dadurch gekennzeichnet, dass** die Welle (3) abgeschrägte Längskanten hat.

3. Kombination eines Werkzeughalters und eines entfernbar angebrachten Schneidwerkzeugs nach Anspruch 1 oder Anspruch 2,**dadurch gekennzeichnet, dass** die Welle eine größere Dicke als der Kopf (2) hat.

4. Kombination eines Werkzeughalters und eines entfernbar angebrachten Schneidwerkzeugs nach einem der Ansprüche 1 bis 3, **dadurch gekennzeichnet, dass** der Schlitz (17) in einer Fläche des Körpers vorgesehen ist.

5. Kombination eines Werkzeughalters und eines entfernbar angebrachten Schneidwerkzeugs nach einem der Ansprüche 1 bis 4, **dadurch gekennzeichnet, dass** der Schlitz (17) mit Oberflächen gebildet ist, die mit entsprechenden Oberflächen der Welle (3) zusammenwirken, um seitliche Zurückhaltung der Welle (3) in dem Schlitz (17) vorzusehen.

6. Kombination eines Werkzeughalters und eines entfernbar angebrachten Schneidwerkzeugs nach einem der Ansprüche 1 bis 5, **dadurch gekennzeichnet, dass** das Ende des Werkzeughalters, das das Werkzeug empfängt, entlang der Achse des Schlitzes (17) gespalten ist, um ein Backenpaar (13,14) zu bilden, das in Rückhalteeingriff mit dem Werkzeug (1) gezogen werden kann.

7. Kombination eines Werkzeughalters und eines entfernbar angebrachten Schneidwerkzeugs nach Anspruch 6, **dadurch gekennzeichnet, dass** ein Gewindebefestigungsmittel benutzt wird, um das Backenpaar (13,14) in Rückhalteeingriff mit dem Werkzeug (1) zu bringen.

## Revendications

1. La combinaison constituée d'un porte-outil et d'un outil de coupe amovible, le porte-outil (10) comprenant un corps allongé (11) muni d'une fente (17) adaptée pour recevoir l'arbre (3) de l'outil (1) et un moyen de blocage de l'outil dans le porte-outil, l'outil de coupe (1) comportant une tête (2) décalée par rapport à l'arbre (3) par un épaulement (5) qui sert, en butant contre le porte-outil, à positionner l'outil (1) par rapport au porte-outil (10), **caractérisée en ce que** la fente se trouve parallèle à l'axe longitudinal du corps, **en ce que** le haut de l'outil (1) intègre une pointe coupante (4) qui est alignée à la fois sur la face latérale de l'épaulement (5) et sur l'arête supérieure du corps (11), et **en ce que** l'outil de coupe est aligné parallèlement à l'axe longitudinal du corps (11).

2. La combinaison constituée d'un porte-outil et d'un outil de coupe amovible selon la revendication 1, **caractérisée en ce que** l'arbre (3) comporte des arêtes longitudinales chanfreinées.

3. La combinaison constituée d'un porte-outil et d'un outil de coupe amovible selon la revendication 1 ou la revendication 2, **caractérisée en ce que** l'épaisseur de l'arbre (3) est supérieure à l'épaisseur de la tête (2).

4. La combinaison constituée d'un porte-outil et d'un outil de coupe amovible selon toute revendication de 1 à 3, **caractérisée en ce que** la fente (17) est aménagée dans une face du corps.

5. La combinaison constituée d'un porte-outil et d'un outil de coupe amovible selon toute revendication de 1 à 4, **caractérisée en ce que** la fente (17) est formée avec des surfaces qui épousent les surfaces correspondantes de l'arbre (3) pour assurer un maintien latéral de l'arbre (3) dans la fente (17).

6. La combinaison constituée d'un porte-outil et d'un outil de coupe amovible selon toute revendication de 1 à 5, **caractérisée en ce que** l'extrémité du porte-outil qui reçoit l'outil est fendue le long de l'axe de la fente (17) pour former une paire de mâchoires (13, 14) qui peuvent être rapprochées de manière à maintenir la prise sur l'outil (1).

7. La combinaison constituée d'un porte-outil et d'un outil de coupe amovible selon la revendication 6, **caractérisée en ce qu'**un boulon fileté est utilisé pour rapprocher la paire de mâchoires (13, 14) de manière à maintenir la prise sur l'outil (1).
